(19) Europäisches Patentamt
European Patent Office
Office européen des brevets

(11) **EP 4 603 882 A1**

(12) **EUROPEAN PATENT APPLICATION**
published in accordance with Art. 153(4) EPC

(43) Date of publication:
**20.08.2025 Bulletin 2025/34**

(21) Application number: **23877249.5**

(22) Date of filing: **06.10.2023**

(51) International Patent Classification (IPC):
***G02B 6/125*** (2006.01)    ***G02B 6/30*** (2006.01)
***G02B 6/36*** (2006.01)

(52) Cooperative Patent Classification (CPC):
**G02B 6/125; G02B 6/30; G02B 6/36**

(86) International application number:
**PCT/JP2023/036575**

(87) International publication number:
**WO 2024/080245 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2022 JP 2022165809**

(71) Applicant: **Sumitomo Bakelite Co.Ltd.
Shinagawa-ku
Tokyo 140-0002 (JP)**

(72) Inventor: **TERADA, Shinsuke
Tokyo 140-0002 (JP)**

(74) Representative: **Ter Meer Steinmeister & Partner
Patentanwälte mbB
Nymphenburger Straße 4
80335 München (DE)**

(54) **OPTICAL WAVEGUIDE AND OPTICAL WIRING COMPONENT**

(57)    An optical waveguide of the present invention includes a first core pattern and a second core pattern, in which the first core pattern includes a first incidence/emission surface and a second incidence/emission surface that are provided at one end of the first core pattern, a third incidence/emission surface and a fourth incidence/emission surface that are provided at the other end of the first core pattern, a first rectifying portion, a first branch portion, and a second branch portion, the second core pattern includes a fifth incidence/emission surface and a sixth incidence/emission surface that are provided at one end of the second core pattern, a seventh incidence/emission surface and an eighth incidence/emission surface that are provided at the other end of the second core pattern, a second rectifying portion, a third branch portion, and a fourth branch portion, a line symmetrical relationship with a first straight line as an axis of symmetry is established between the first to fourth incidence/emission surfaces and the fifth to eighth incidence/emission surfaces, and a line symmetrical relationship with a second straight line as an axis of symmetry is established between the first incidence/emission surface and the third incidence/emission surface and the second incidence/emission surface and the fourth incidence/emission surface and between the fifth incidence/emission surface and the seventh incidence/emission surface and the sixth incidence/emission surface and the eighth incidence/emission surface.

FIG. 2

## Description

Technical Field

The present invention relates to an optical waveguide and an optical wiring component.

Background Art

PTL 1 discloses a branched optical waveguide that distributes an input optical signal or mixes two input optical signals into one optical signal. This branched optical waveguide has a first core portion, a second core portion and a third core portion that branch from the first core portion into two portions, and has a Y-shape.
PTL 2 discloses an optical waveguide in which core portions merge and branch in an X-shape. In this optical waveguide, mixing of optical signals and distribution of the mixed optical signal can be performed.
By using these optical waveguides, it is possible to perform the distribution or the mixing without converting the optical signal into an electrical signal. Therefore, it is possible to achieve high speed and power saving in the distribution and the mixing of a large amount of data.
In addition, PTL 1 discloses a technology for multiplexing light having different wavelengths, and PTL 2 discloses a technology for transmitting upstream and downstream optical signals in one optical waveguide by changing wavelengths of the optical signals.

Citation List

Patent Literature

[PTL 1] Japanese Laid-open patent publication NO. 2017-151275
[PTL 2] WO2021/192674A

Summary of Invention

Technical Problem

In the branched optical waveguide described in PTL 1, the core portion has a Y-shaped linear shape. Therefore, a structure has directionality, and sufficient care is required for connection work. For example, in a case where the linear shape of the core portion cannot be discriminated from the appearance, or even in a case where the linear shape can be discriminated, there is a concern that an input side and an output side are erroneously connected in reverse due to carelessness. In addition, in assembly work of containing the optical waveguide in a housing, there is a concern that the assembling is performed in a state where the input side and the output side of the optical waveguide are reversed.
In the optical waveguide described in PTL 2, the core portion has an X-shaped linear shape. Therefore, in a case where the structure is isotropically designed, the directionality can be ignored. However, such a configuration is not considered in PTL 2.
In addition, in a case where the upstream optical signal and the downstream optical signal are transmitted to one optical waveguide using light having different wavelengths, it is required to handle the light having different wavelengths in a device connected to the optical waveguide. In this case, there is a concern that the structure of the device is complicated.
An object of the present invention is to provide an optical waveguide and an optical wiring component that can reduce a burden of connection work or assembly work and can contribute to simplification of a structure of a connected device.

Solution to Problem

Such an object is achieved by the present invention described in the following (1) to (10).

(1) An optical waveguide that forms a sheet shape spreading along a plane, the optical waveguide including: a first core pattern and a second core pattern that are independently disposed, in a case where two straight lines orthogonal to each other in the plane are defined as a first straight line and a second straight line, on both sides with respect to the first straight line, in which the first core pattern includes a first incidence/emission surface and a second incidence/emission surface that are provided at one end of the first core pattern, a third incidence/emission surface and a fourth incidence/emission surface that are provided at the other end of the first core pattern, a first rectifying portion that extends along the first straight line, a first branch portion that connects one end of the first rectifying portion to the first incidence/emission surface and the second incidence/emission surface, and a second branch portion that connects the other end of the first rectifying portion to the third incidence/emission surface and the fourth incidence/emission surface, the second core pattern includes a fifth incidence/emission surface and a sixth incidence/emission surface that are provided at one end of the second core pattern, a seventh incidence/emission surface and an eighth incidence/emission surface that are provided at the other end of the second core pattern, a second rectifying portion that extends along the first straight line, a third branch portion that connects one end of the second rectifying portion to the fifth incidence/emission surface and the sixth incidence/emission surface, and a fourth branch portion that connects the other end of the second rectifying portion to the seventh incidence/emission surface and the eighth incidence/emission surface, a line symmetrical relationship with the first straight line as an axis of symmetry is established between the first incidence/emission surface, the second incidence/emission surface, the third incidence/emission surface, and the fourth incidence/emission surface and the fifth incidence/emission surface, the sixth incidence/emission surface, the seventh incidence/emission surface, and the eighth incidence/emission surface, a line symmetrical relationship with the second straight line as an axis of symmetry is established between the first incidence/emission surface and the third incidence/emission surface and the second incidence/emission surface and the fourth incidence/emission surface, and a line symmetrical relationship with the second straight line as an axis of symmetry is established between the fifth incidence/emission surface and the seventh incidence/emission surface and the sixth incidence/emission surface and the eighth incidence/emission surface.

(2) The optical waveguide according to (1), in which the first branch portion includes a first core that connects the one end of the first rectifying portion to the first incidence/emission surface, and a second core that connects the one end of the first rectifying portion to the second incidence/emission surface, the second branch portion includes a third core that connects the other end of the first rectifying portion to the third incidence/emission surface, and a fourth core that connects the other end of the first rectifying portion to the fourth incidence/emission surface, and in a case where a width at an intermediate portion of a length of the first rectifying portion is denoted by $WM1$, a width of the first core at a connection portion between the first rectifying portion and the first branch portion is denoted by $WC1$, a width of the second core at the connection portion between the first rectifying portion and the first branch portion is denoted by $WC2$, a width of the third core at a connection portion between the first rectifying portion and the second branch portion is denoted by $WC3$, a width of the fourth core at the connection portion between the first rectifying portion and the second branch portion is denoted by $WC4$, a width of the first incidence/emission surface is denoted by $WP1$, a width of the second incidence/emission surface is denoted by $WP2$, a width of the third incidence/emission surface is denoted by $WP3$, and a width of the fourth incidence/emission surface is denoted by $WP4$,

$$0.9 \times (WC1 + WC2) \leq WM1 \leq 1.1 \times (WC1 + WC2),$$

$$0.9 \times (WC3 + WC4) \leq WM1 \leq 1.1 \times (WC3 + WC4),$$

$$WA = WP1 = WP3,$$

$$WB = WP2 = WP4,$$

and

$$0.9 \times (WA + WB) \leq WM1 \leq 1.1 \times (WA + WB)$$

are satisfied.

(3) The optical waveguide according to (2), in which the third branch portion includes a fifth core that connects the one end of the second rectifying portion to the fifth incidence/emission surface, and a sixth core that connects the one end of the second rectifying portion to the sixth incidence/emission surface, the fourth branch portion includes a seventh core that connects the other end of the second rectifying portion to the seventh incidence/emission surface, and an eighth core that connects the other end of the second rectifying portion to the eighth incidence/emission surface, and in a case where a width at an intermediate portion of a length of the second rectifying portion is denoted by $WM2$, a width of the fifth core at a connection portion between the second rectifying portion and the third branch portion is denoted by $WC5$, a width of the sixth core at the connection portion between the second rectifying portion and the third branch portion is denoted by $WC6$, a width of the seventh core at a connection portion between the second rectifying portion and the fourth branch portion is denoted by $WC7$, a width of the eighth core at the connection portion between the second rectifying portion and the fourth branch portion is denoted by WC8, a width of the fifth incidence/emission surface is denoted by WP5, a width of the sixth incidence/emission surface is denoted by WP6, a width of the seventh incidence/emission surface is denoted by WP7, and a width of the eighth incidence/emission surface is denoted by WP8,

$$0.9 \times (WC5 + WC6) \leq WM2 \leq 1.1 \times (WC5 + WC6),$$

$$0.9 \times (WC7 + WC8) \leq WM2 \leq 1.1 \times (WC7 + WC8),$$

$$WA = WP5 = WP7,$$

$$WB = WP6 = WP8,$$

and

$$0.9 \times (WA + WB) \leq WM2 \leq 1.1 \times (WA + WB)$$

are satisfied.

(4) The optical waveguide according to any one of (1) to (3), in which, in a case where a length of the first rectifying portion is denoted by LM1, a width at an intermediate portion of the length LM1 is denoted by WM1, a length of the second rectifying portion is denoted by LM2, and a width at an intermediate portion of the length LM2 is denoted by WM2,

$$100 \times WM1 \leq LM1,$$

and

$$100 \times WM2 \leq LM2$$

are satisfied.

(5) The optical waveguide according to any one of (1) to (4), in which a line symmetrical relationship with the first straight line as an axis of symmetry is established between a linear shape of the first branch portion and a linear shape of the third branch portion and between a linear shape of the second branch portion and a linear shape of the fourth branch portion, and a line symmetrical relationship with the second straight line as an axis of symmetry is established between the linear shape of the first branch portion and the linear shape of the second branch portion and between the linear shape of the third branch portion and the linear shape of the fourth branch portion.

(6) The optical waveguide according to any one of any one of (1) to (5), in which the optical waveguide is configured by a laminate including a core layer that includes the first core pattern and the second core pattern, a first cladding layer that is laminated on one surface of the core layer, and a second cladding layer that is laminated on the other surface of the core layer.

(7) The optical waveguide according to (6), in which the laminate has a plane symmetrical relationship with a plane that is parallel to the plane and that passes through an intermediate portion of a thickness of the core layer.

(8) The optical waveguide according to (6) or (7), in which the laminate is made of a resin material.

(9) An optical wiring component including: the optical waveguide according to any one of (1) to (8); a housing that contains the optical waveguide; a first connection portion that connects at least one of the first incidence/emission surface or the second incidence/emission surface to a first A optical fiber and that connects at least one of the fifth incidence/emission surface or the sixth incidence/emission surface to a second A optical fiber; and a second connection portion that connects the third incidence/emission surface and the fourth incidence/emission surface to a first B optical fiber and that connects the seventh incidence/emission surface and the eighth incidence/emission surface to a second B optical fiber.

(10) The optical wiring component according to (9), further including: the first A optical fiber; the first B optical fiber; the second A optical fiber; the second B optical fiber; one or two first light emission portions that cause light to be incident on the first core pattern through the first A optical fiber; two first light reception portions that receive light emitted from the first core pattern through the first B optical fiber; two second light emission portions that cause light to be incident on the second core pattern through the second B optical fiber; and one or two second light reception portions that receive light emitted from the second core pattern through the second A optical fiber.

Advantageous Effects of Invention

According to the present invention, it is possible to obtain the optical waveguide and the optical wiring component that can reduce the burden of the connection work or the assembly work and can contribute to the simplification of the structure of the connected device.

Brief Description of Drawings

FIG. 1 is a schematic view showing an optical wiring component according to an embodiment.
FIG. 2 is a plan view showing an optical waveguide according to the embodiment.
FIG. 3 is a plan view in which reference numerals of the optical waveguide shown in FIG. 2 are rewritten.
FIG. 4 is a perspective view showing a part of the optical waveguide of FIG. 1 in an enlarged manner.
FIG. 5 is a perspective view showing an example of an optical waveguide with a ferrule.
FIG. 6 is a perspective view showing a part of an optical wiring component including the optical waveguide with a ferrule of FIG. 5, a housing, a first connection portion, and a second connection portion, and a fiber ribbon in a partially exploded manner.

Description of Embodiments

Hereinafter, an optical waveguide and an optical wiring component according to an embodiment of the present invention will be described in detail based on preferred embodiments shown in the accompanying drawings.

1. Optical Wiring Component

First, the optical waveguide and the optical wiring component according to the embodiment will be described.

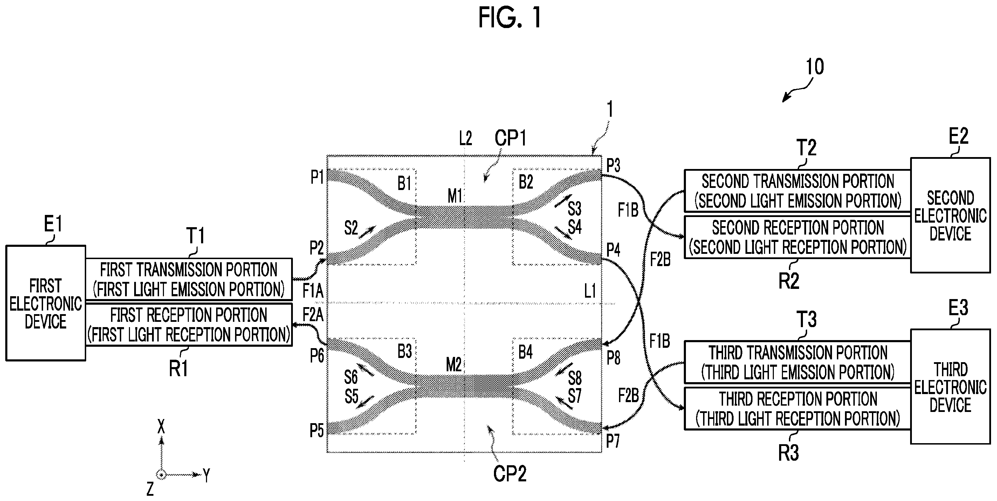

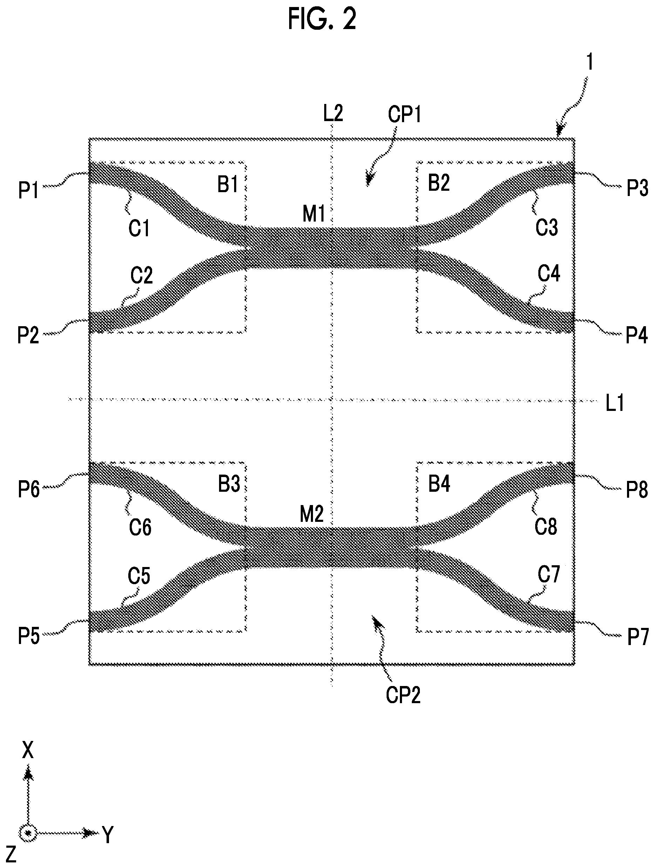

FIG. 1 is a schematic view showing an optical wiring component 10 according to the embodiment. FIG. 2 is a plan view showing an optical waveguide 1 according to the embodiment.
In each of the drawings of the present application, an X-axis, a Y-axis, and a Z-axis are set as three axes orthogonal to each other and are indicated by arrows. In addition, a tip end side of the arrow is referred to as a "positive side", and a base end side thereof is referred to as a "negative side". In addition, a Z-axis positive side is also referred to as "up" and a Z-axis negative side is also referred to as "down".
The optical wiring component 10 shown in FIG. 1 includes the optical waveguide 1, a first A optical fiber F1A, a second A optical fiber F2A, a first B optical fiber F1B, and a second B optical fiber F2B.
The optical waveguide 1 is disposed between the first A optical fiber F1A and the second A optical fiber F2A and between the first B optical fiber F1B and the second B optical fiber F2B, and optically connects the first A optical fiber F1A and the second A optical fiber F2A to the first B optical fiber F1B and the second B optical fiber F2B to relay an optical signal.
In addition, the optical wiring component 10 shown in FIG. 1 includes a first transmission portion T1 (first light emission portion), a first reception portion R1 (second light reception portion), a second transmission portion T2 and a third transmission portion T3 (two second light emission portions), and a second reception portion R2 and a third reception portion R3 (two first light reception portions).
FIG. 1 shows a first electronic device E1, a second electronic device E2, and a third electronic device E3.
The first electronic device E1 is electrically connected to the first transmission portion T1 (first light emission portion) and the first reception portion R1 (second light reception portion). The second electronic device E2 is electrically connected to the second transmission portion T2 (second light emission portion) and the second reception portion R2 (first light reception portion). The third electronic device E3 is electrically connected to the third transmission portion T3 (second light emission portion) and the third reception portion R3 (first light reception portion).
The first transmission portion T1 causes light to be incident on a first core pattern CP1 through the first A optical fiber F1A. The second reception portion R2 and the third reception portion R3 receive light emitted from the first core pattern CP1 through the first B optical fiber F1B.
The second transmission portion T2 and the third transmission portion T3 cause light to be incident on a second core pattern CP2 through the second B optical fiber F2B. The first reception portion R1 receives light emitted from the second core pattern CP2 through the second A optical fiber F2A.

2. Optical Waveguide

The optical signal output from each transmission portion is received by each reception portion through the above-described optical fiber and the optical waveguide 1. By using the optical wiring component 10 that operates in this way, optical communication between the electronic devices can be performed. In the example of FIG. 1, the optical communication can be performed between the first electronic device E1 and the second electronic device E2 and between the first electronic device E1 and the third electronic device E3.

2.1. Overview of Core Pattern

The optical waveguide 1 shown in FIG. 2 has a sheet shape spreading along a plane parallel to an X-Y plane. In addition, in a case where two straight lines orthogonal to each other in the plane are defined as a first straight line L1 and a second straight line L2, the optical waveguide 1 includes the first core pattern CP1 and the second core pattern CP2 that are independently disposed on both sides with respect to the first straight line L1. Each of the first core pattern CP1 and the second core pattern CP2 is configured by a core portion (optical transmission portion) that transmits the optical signal.

The first core pattern CP1 includes a first incidence/emission surface P1 and a second incidence/emission surface P2 that are provided at one end of the first core pattern CP1, a third incidence/emission surface P3 and a fourth incidence/emission surface P4 that are provided at the other end of the first core pattern CP1, a first rectifying portion M1, a first branch portion B1, and a second branch portion B2. The first rectifying portion M1 extends along the first straight line L1. In the present specification, the phase "extend along a straight line" means extending linearly in parallel with the straight line.

The first branch portion B1 includes a first core C1 and a second core C2. The first core C1 and the second core C2 each have a curved shape, extend to be separated from each other in an X-axis direction from one end (end on the Y-axis negative side) of the first rectifying portion M1 toward the Y-axis negative side, and connect the one end of the first rectifying portion M1 to the first incidence/emission surface P1 and the second incidence/emission surface P2.

The second branch portion B2 includes a third core C3 and a fourth core C4. The third core C3 and the fourth core C4 each have a curved shape, extend to be separated from each other in the X-axis direction from the other end (end on the Y-axis positive side) of the first rectifying portion M1 toward the Y-axis positive side, and connect the other end of the first rectifying portion M1 to the third incidence/emission surface P3 and the fourth incidence/emission surface P4.

The second core pattern CP2 includes a fifth incidence/emission surface P5 and a sixth incidence/emission surface P6 that are provided at one end of the second core pattern CP2, a seventh incidence/emission surface P7 and an eighth incidence/emission surface P8 that are provided at the other end of the second core pattern CP2, a second rectifying portion M2, a third branch portion B3, and a fourth branch portion B4. The second rectifying portion M2 extends along the first straight line L1.

The third branch portion B3 includes a fifth core C5 and a sixth core C6. The fifth core C5 and the sixth core C6 each have a curved shape, extend to be separated from each other in the X-axis direction from one end (end on the Y-axis negative side) of the second rectifying portion M2 toward the Y-axis negative side, and connect the one end of the second rectifying portion M2 to the fifth incidence/emission surface P5 and the sixth incidence/emission surface P6.

The fourth branch portion B4 includes a seventh core C7 and an eighth core C8. The seventh core C7 and the eighth core C8 each have a curved shape, extend to be separated from each other in the X-axis direction from the other end of the second rectifying portion M2 (end on the Y-axis positive side) toward the Y-axis positive side, and connect the other end of the second rectifying portion M2 to the seventh incidence/emission surface P7 and the eighth incidence/emission surface P8.

By providing such two core patterns, it is possible to distinguish between downstream and upstream optical signals. For example, the first core pattern CP1 is used for the transmission of the optical signal toward the Y-axis positive side, and the second core pattern CP2 is used for the transmission of the optical signal toward the Y-axis negative side.

In a case where both the downstream optical signal and the upstream optical signal are transmitted by one core pattern, it is required to use light having different wavelengths. Therefore, in a device that transmits and receives information through the optical waveguide, a special device for sharing the same line for downstream and upstream, for example, a device used for wavelength division multiplexing optical communication is required. The need for such a device causes a structure of the device that transmits and receives information to be complicated and causes an increase in cost. In addition, in a case where an optical element that separates the downstream optical signal and the upstream optical signal is used, a decrease in transmission quality is also a problem. Further, depending on the structure, a material, a manufacturing method, and the like of the optical waveguide 1, the transmission quality may vary in accordance with the wavelength.

On the other hand, in the optical waveguide 1 shown in FIG. 2, since a transmission direction of the optical signal can be divided, a special device required to transmit bidirectional optical signals with one core pattern is not required. Therefore, it is possible to simplify the structures of the first electronic device E1, the second electronic device E2, and the third electronic device E3 that transmit and receive information through the optical waveguide 1, or the structures of the light emission portion and the light reception portion. In addition, since the optical element that separates the downstream optical signal and the upstream optical signal is not required, a decrease in transmission quality is suppressed, and high-speed and large-capacity communication can be performed. Further, in a case where light of the same wavelength is used for the downstream optical signal and the upstream optical signal, it is possible to solve the problem that the transmission quality varies in accordance with the wavelength.

In addition, the first core pattern CP1 and the second core pattern CP2 each have a function of mixing and distributing the optical signals.

In the example of FIG. 1, an optical signal S2 emitted from the first transmission portion T1 is received by the second incidence/emission surface P2 of the first core pattern CP1 through the first A optical fiber F1A. The optical signal S2 is transmitted from the first rectifying portion M1 to the second branch portion B2, and is distributed into two optical signals S3 and S4. Then, the optical signal S3 emitted from the third incidence/emission surface P3 is received by the second reception portion R2 through the first B optical fiber F1B. In addition, the optical signal S4 emitted from the fourth incidence/emission surface P4 is received by the third reception portion R3 through the first B optical fiber F1B. In the following description, the signal transmission in which the optical signal S2 is distributed to the optical signals S3 and S4 as described above is referred to as "upstream communication".

On the other hand, in the example of FIG. 1, an optical signal S8 emitted from the second transmission portion T2 is received by the eighth incidence/emission surface P8 of the second core pattern CP2 through the second B optical fiber F2B. In addition, an optical signal S7 emitted from the third transmission portion T3 is received by the seventh incidence/emission surface P7 through the second B optical fiber F2B. The optical signals S7 and S8 are mixed in the fourth branch portion B4, and are transmitted to the second rectifying portion M2. The mixed optical signals S7 and S8 are transmitted from the second rectifying portion M2 to the third branch portion B3, and are distributed into two optical signals S5 and S6. Then, the optical signal S6 emitted from the sixth incidence/emission surface P6 is received by the first reception portion R1 through the second A optical fiber F2A. On the other hand, the optical signal S5 need only be forcibly attenuated or radiated into a space. In the following description, the signal transmission in which the optical signals S7 and S8 are mixed and then distributed into the optical signals S5 and S6 is referred to as "downstream communication".

In this way, in the example of FIG. 1, the information output by the first electronic device E1 can be distributed to the second electronic device E2 and the third electronic device E3 through the first core pattern CP1. Such an optical communication technology is preferably used, for example, in a passive optical network (PON). In addition, the passive optical network may be an in-vehicle network.

The first electronic device E1 is not particularly limited, and, for example, in a case where the first electronic device E1 is an in-vehicle device, in addition to various sensors such as an image sensor, such as a camera, and a distance-measuring sensor, such as a laser imaging, detection and ranging (LiDAR) sensor or a millimeter-wave sensor, an antenna module and the like are included. In the following description, the first electronic device E1 may be referred to as a "slave function unit". These devices generate a large amount of information in a short time. Therefore, a large communication capacity is required for the upstream communication.

In the present embodiment, although the first electronic device E1 is only one electronic device connected to the Y-axis negative side with respect to the optical waveguide 1, another electronic device as the slave function unit may be added in parallel with the first electronic device E1. That is, another electronic device may be connected to the first incidence/emission surface P1 and the fifth incidence/emission surface P5 through an optical fiber (not shown). In this case, the optical signals output from a plurality of slave function units are mixed and distributed. Therefore, for example, time division multiple access (TDMA) or time division multiplexing (TDM) may be used as a technology for avoiding collision of pieces of information output from the plurality of slave function units. Further, wavelength division multiplexing (WDM) may be used as long as the cost required for demultiplexing, multiplexing, and the like is within an acceptable range.

The second electronic device E2 and the third electronic device E3 receive this large amount of information and preferably process the information in real time. Therefore, the second electronic device E2 and the third electronic device E3 are not particularly limited, and examples thereof include a computing device such as a microcomputer. Specifically, in a case where the second electronic device E2 and the third electronic device E3 are each the in-vehicle device, examples thereof include an electronic control unit (ECU), a navigation device, a telematics communication unit (TCU), and a gateway device. In the following description, each of the second electronic device E2 and the third electronic device E3 may be referred to as a "master function unit". Various functions are implemented based on the computation results in these devices. In many cases, real-time performance is required for processing of information, so that a high-speed communication rate is required for the upstream communication.

With the first core pattern CP1, it is possible to perform higher-speed and larger-capacity communication in the upstream communication than in the related art. Therefore, with the optical communication using the optical waveguide 1, it is possible to implement a system that can process a large amount of information in real time. In addition, since the information can be distributed in a form of the optical signal in the information distribution described above, the information processing units can be parallelized while suppressing power consumption, which contributes to, for example, the redundancy of the system. That is, the second electronic device E2 and the third electronic device E3 can increase the fault tolerance of the system by processing the same information in parallel.

On the other hand, with the second core pattern CP2, even in the downstream communication, high-speed and large-capacity communication can be performed as in the upstream communication. In addition, even in the downstream communication, the optical signals output from a plurality of master function units are mixed and distributed. Therefore, in the downstream communication, for example, time division multiplexing (TDM) or time division multiple access (TDMA) may be used as a technology for avoiding collision of pieces of information output from the plurality of master function units. Further, wavelength division multiplexing (WDM) may be used as long as the cost required for demultiplexing, multiplexing, and the like is within an acceptable range.

2.2. Symmetry of Incidence/Emission Surface

Here, in the optical waveguide 1 shown in FIG. 2, a line symmetrical relationship with the first straight line L1 as an axis of symmetry is established between the first incidence/emission surface P1, the second incidence/emission surface P2, the third incidence/emission surface P3, and the fourth incidence/emission surface P4, and the fifth incidence/emission surface P5, the sixth incidence/emission surface P6, the seventh incidence/emission surface P7, and the eighth incidence/emission surface P8. Specifically, the line symmetrical relationship means that the widths and the positions of the corresponding incidence/emission surfaces are in a line symmetrical relationship. In other words, in a case where it is assumed that the optical waveguide 1 is folded at the first straight line L1, the widths and the positions match each other between the first incidence/emission surface P1 and the fifth incidence/emission surface P5, between the second incidence/emission surface P2 and the sixth incidence/emission surface P6, between the third incidence/emission surface P3 and the seventh incidence/emission surface P7, and between the fourth incidence/emission surface P4 and the eighth incidence/emission surface P8. The width of the incidence/emission surface means a length of the incidence/emission surface in the X-axis direction.

In a case where such a relationship is established, even though the optical waveguide 1 is rotated (inverted) by 180° with the first straight line L1 as a rotation axis, there is no change in the width and the position of each of the incidence/emission surfaces. That is, the width and the position of each of the incidence/emission surfaces are equivalent before and after the inversion. Therefore, in a case where the optical waveguide 1 is used for the connection work of the optical fibers, it is not required to be concerned about the inversion with the first straight line L1 as the rotation axis. Therefore, the optical waveguide 1 contributes to the reduction in the burden of the connection work. In addition, the optical waveguide 1 may be contained in a housing (not shown) or the like and used in a state of an optical connection component. In the optical waveguide 1, even in the assembly work of such an optical connection component, it is not required to be concerned about the inversion with the first straight line L1 as the rotation axis, and thus the burden of the assembly work can be reduced.

In addition, in the optical waveguide 1 shown in FIG. 2, a line symmetrical relationship with the second straight line L2 as an axis of symmetry is established between the first incidence/emission surface P1 and the third incidence/emission surface P3 and the second incidence/emission surface P2 and the fourth incidence/emission surface P4. In other words, in a case where it is assumed that the optical waveguide 1 is folded at the second straight line L2, the widths and the positions match each other between the first incidence/emission surface P1 and the third incidence/emission surface P3 and between the second incidence/emission surface P2 and the fourth incidence/emission surface P4.

Further, in the optical waveguide 1 shown in FIG. 2, a line symmetrical relationship with the second straight line L2 as an axis of symmetry is established between the fifth incidence/emission surface P5 and the seventh incidence/emission surface P7 and the sixth incidence/emission surface P6 and the eighth incidence/emission surface P8. In other words, in a case where it is assumed that the optical waveguide 1 is folded at the second straight line L2, the widths and the positions match each other between the fifth incidence/emission surface P5 and the seventh incidence/emission surface P7 and between the sixth incidence/emission surface P6 and the eighth incidence/emission surface P8.

In a case where such a relationship is established, even though the optical waveguide 1 is rotated (inverted) by 180° with the second straight line L2 as a rotation axis, there is no change in the width and the position of each of the incidence/emission surfaces. That is, the width and the position of each of the incidence/emission surfaces are equivalent before and after the inversion. Therefore, in a case where the optical waveguide 1 is used for the connection work of the optical fibers, it is not required to be concerned about the inversion with the second straight line L2 as the rotation axis. Therefore, the optical waveguide 1 contributes to the reduction in the burden of the connection work. In the optical waveguide 1, even in the assembly work of the optical connection component, it is not required to be concerned about the inversion with the second straight line L2 as the rotation axis, and thus the burden of the assembly work can be reduced.

The phrase "the widths match" means that a difference in the width between the two corresponding incidence/emission surfaces is 20% or less of an average width of the two incidence/emission surfaces. Specifically, in a case where the average width of the corresponding two incidence/emission surfaces is 50 $\mu$m, the difference in the width need only be 10 $\mu$m or less.

In addition, the phrase "the positions match" means that, in a case where it is assumed that the optical waveguide 1 is folded at the first straight line L1 or the second straight line L2, a deviation amount between the intermediate points of the widths between the two corresponding incidence/emission surfaces is 20% or less of the average width of the two incidence/emission surfaces. Specifically, in a case where the average width of the corresponding two incidence/emission surfaces is 50 μm, the above-described deviation amount need only be 10 μm or less.

## 2.3. Shape of Core Pattern

Next, shapes of the first core pattern CP1 and the second core pattern CP2 will be described.

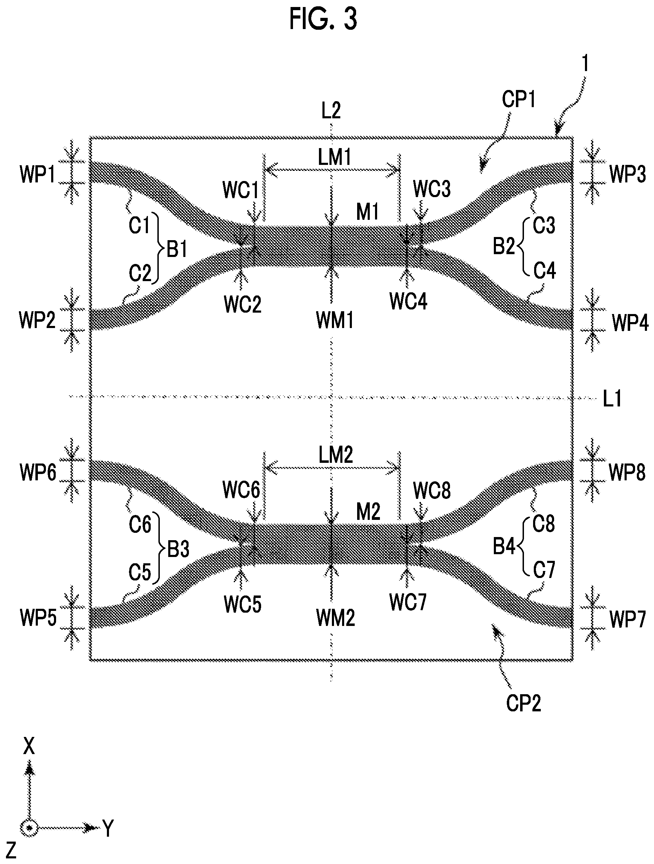

FIG. 3 is a plan view in which reference numerals of the optical waveguide 1 shown in FIG. 2 are rewritten.

### 2.3.1. Width of Each Portion of First Core Pattern

The first branch portion B1 shown in FIG. 3 includes the first core C1 and the second core C2. The first core C1 connects the one end of the first rectifying portion M1 to the first incidence/emission surface P1. The second core C2 connects the one end of the first rectifying portion M1 to the second incidence/emission surface P2.
The second branch portion B2 shown in FIG. 3 includes the third core C3 and the fourth core C4. The third core C3 connects the other end of the first rectifying portion M1 to the third incidence/emission surface P3. The fourth core C4 connects the other end of the first rectifying portion M1 to the fourth incidence/emission surface P4.
A length of the first rectifying portion M1 is denoted by LM1. Further, a width at an intermediate portion of the length LM1 is denoted by WM1.
A width of the first core C1 at a connection portion between the first rectifying portion M1 and the first branch portion B1 is denoted by WC1, a width of the second core C2 at a connection portion between the first rectifying portion M1 and the first branch portion B1 is denoted by WC2, a width of the third core C3 at a connection portion between the first rectifying portion M1 and the second branch portion B2 is denoted by WC3, and a width of the fourth core C4 at a connection portion between the first rectifying portion M1 and the second branch portion B2 is denoted by WC4. The connection portion means a starting point at which each core branches from the first rectifying portion M1.
In this case, in the optical waveguide 1, it is preferable that relationships represented by Expression (1) and Expression (2) are established.

$$0.9 \times (WC1 + WC2) \le WM1 \le 1.1 \times (WC1 + WC2) \ ... \ (1)$$

$$0.9 \times (WC3 + WC4) \le WM1 \le 1.1 \times (WC3 + WC4) \ ... \ (2)$$

Expression (1) and Expression (2) mean that the width WM1 of the first rectifying portion M1 is about the same as the sum of the width WC1 of the first core C1 and the width WC2 of the second core C2 and the sum of the width WC3 of the third core C3 and the width WC4 of the fourth core C4. In a case where the optical waveguide 1 satisfies Expression (1) and Expression (2), it is possible to suppress a loss associated with a change in the width of the core at the connection portion between the first rectifying portion M1 and the first branch portion B1 and the connection portion between the first rectifying portion M1 and the second branch portion B2.
Further, a width of the first incidence/emission surface P1 is denoted by WP1, a width of the second incidence/emission surface P2 is denoted by WP2, a width of the third incidence/emission surface P3 is denoted by WP3, and a width of the fourth incidence/emission surface P4 is denoted by WP4.
In this case, in the optical waveguide 1, it is preferable that relationships represented by Expression (3), Expression (4), and Expression (5) are established.

$$WA = WP1 = WP3 \ ... \ (3)$$

$$WB = WP2 = WP4 \ ... \ (4)$$

$$0.9 \times (WA + WB) \le WM1 \le 1.1 \times (WA + WB) \ ... \ (5)$$

In Expression (3), the width WP1 of the first incidence/emission surface P1 and the width WP3 of the third incidence/emission surface P3 are each defined as a width WA. In Expression (4), the width WP2 of the second incidence/emission surface P2 and the width WP4 of the fourth incidence/emission surface P4 are each defined as a width WB. The equal sign in Expression (3) and Expression (4) means that "the widths match each other".
Expression (5) means that the width WM1 of the first rectifying portion M1 is about the same as the sum of the width WA and the width WB.

Therefore, Expressions (1) to (5) mean that the width WM1 of the first rectifying portion M1 is about the same as the sum of the widths of the two cores constituting the first branch portion B1 and the sum of the widths of the two cores constituting the second branch portion B2, and is about the same as the sum of the widths of the incidence/emission surfaces connected to the first branch portion B1 and the sum of the widths of the incidence/emission surfaces connected to the second branch portion B2.

In a case where the optical waveguide 1 satisfies Expressions (1) to (5), it is possible to suppress a loss due to a change in the width of the core within a range from the first rectifying portion M1 to the first incidence/emission surface P1 and the second incidence/emission surface P2 and within a range from the first rectifying portion M1 to the third incidence/emission surface P3 and the fourth incidence/emission surface P4.

In a case where the width WM1 of the first rectifying portion M1 in Expression (1) is less than the lower limit value, there is a concern that a loss increases in a case where the optical signals are mixed at the connection portion between the first branch portion B1 and the first rectifying portion M1. On the other hand, in a case where the width WM1 of the first rectifying portion M1 in Expression (1) exceeds the upper limit value, there is a concern that a loss increases in a case where the optical signal is distributed at the connection portion between the first branch portion B1 and the first rectifying portion M1.

In addition, in a case where the width WM1 of the first rectifying portion M1 in Expression (2) is less than the lower limit value, there is a concern that a loss increases in a case where the optical signals are mixed at the connection portion between the second branch portion B2 and the first rectifying portion M1. On the other hand, in a case where the width WM1 of the first rectifying portion M1 in Expression (2) exceeds the upper limit value, there is a concern that a loss increases in a case where the optical signal is distributed at the connection portion between the second branch portion B2 and the first rectifying portion M1.

Further, in a case where the width WM1 of the first rectifying portion M1 in Expression (5) is less than the lower limit value, there is a concern that a loss increases in a case where the optical signals are mixed in the first core pattern CP1. On the other hand, in a case where the width WM1 of the first rectifying portion M1 exceeds the upper limit value in Expression (5), there is a concern that a loss increases in a case where the optical signal is distributed in the first core pattern CP1.

The widths WC1 to WC4 are each preferably about 5 to 100 $\mu$m, and more preferably about 10 to 70 $\mu$m. As a result, a core having good dimensional accuracy and having low transmission loss is obtained.

In addition, the widths WA and WB are each preferably about 5 to 100 $\mu$m, and more preferably about 10 to 70 $\mu$m. As a result, the optical waveguide 1 having a small connection loss with the optical fiber is obtained.

2.3.2. Width of Each Portion of Second Core Pattern

The third branch portion B3 includes the fifth core C5 and the sixth core C6. The fifth core C5 connects the one end of the second rectifying portion M2 to the fifth incidence/emission surface P5. The sixth core C6 connects the one end of the second rectifying portion M2 to the sixth incidence/emission surface P6.

The fourth branch portion B4 includes the seventh core C7 and the eighth core C8. The seventh core C7 connects the other end of the second rectifying portion M2 to the seventh incidence/emission surface P7. The eighth core C8 connects the other end of the second rectifying portion M2 to the eighth incidence/emission surface P8.

A length of the second rectifying portion M2 is denoted by LM2. Further, a width in an intermediate portion of the length LM2 is denoted by WM2.

A width of the fifth core C5 at a connection portion between the second rectifying portion M2 and the third branch portion B3 is denoted by WC5, a width of the sixth core C6 at a connection portion between the second rectifying portion M2 and the third branch portion B3 is denoted by WC6, a width of the seventh core C7 at a connection portion between the second rectifying portion M2 and the fourth branch portion B4 is denoted by WC7, and a width of the eighth core C8 at a connection portion between the second rectifying portion M2 and the fourth branch portion B4 is denoted by WC8. The connection portion means a starting point at which each core branches from the second rectifying portion M2.

In this case, in the optical waveguide 1, it is preferable that relationships represented by Expression (6) and Expression (7) are established.

$$0.9 \times (WC5 + WC6) \leq WM2 \leq 1.1 \times (WC5 + WC6) \quad ... \quad (6)$$

$$0.9 \times (WC7 + WC8) \leq WM2 \leq 1.1 \times (WC7 + WC8) \quad ... \quad (7)$$

Expression (6) and Expression (7) mean that the width WM2 of the second rectifying portion M2 is about the same as the sum of the width WC5 of the fifth core C5 and the width WC6 of the sixth core C6 and the sum of the width WC7 of the seventh core C7 and the width WC8 of the eighth core C8. In a case where the optical waveguide 1 satisfies Expression (6) and Expression (7), it is possible to suppress a loss due to a change in the width of the core at the connection portion between the second rectifying portion M2 and the third branch portion B3 and the connection portion between the second rectifying portion M2 and the fourth branch portion B4.

Further, a width of the fifth incidence/emission surface P5 is denoted by WP5, a width of the sixth incidence/emission surface P6 is denoted by WP6, a width of the seventh incidence/emission surface P7 is denoted by WP7, and a width of the eighth incidence/emission surface P8 is denoted by WP8.

In this case, in the optical waveguide 1, it is preferable that relationships represented by Expression (8), Expression (9), and Expression (10) are established.

$$WA = WP5 = WP7 \ldots (8)$$

$$WB = WP6 = WP8 \ldots (9)$$

$$0.9 \times (WA + WB) \leq WM2 \leq 1.1 \times (WA + WB) \ldots (10)$$

In Expression (8), the width WP5 of the fifth incidence/emission surface P5 and the width WP7 of the seventh incidence/emission surface P7 are each defined as the width WA. In Expression (9), the width WP6 of the sixth incidence/emission surface P6 and the width WP8 of the eighth incidence/emission surface P8 are each defined as the width WB. The equal sign in Expression (8) and Expression (9) means that "the widths match each other".

Expression (10) means that the width WM2 of the second rectifying portion M2 is about the same as the sum of the width WA and the width WB.

Therefore, Expressions (6) to (10) mean that the width WM2 of the second rectifying portion M2 is about the same as the sum of the widths of the two cores constituting the third branch portion B3 and the sum of the widths of the two cores constituting the fourth branch portion B4, and is about the same as the sum of the widths of the incidence/emission surfaces connected to the third branch portion B3 and the sum of the widths of the incidence/emission surfaces connected to the fourth branch portion B4.

In a case where the optical waveguide 1 satisfies Expressions (6) to (10), it is possible to suppress a loss due to a change in the width of the core in a range from the second rectifying portion M2 to the fifth incidence/emission surface P5 and the sixth incidence/emission surface P6 and in a range from the second rectifying portion M2 to the seventh incidence/emission surface P7 and the eighth incidence/emission surface P8.

In a case where the width WM2 of the second rectifying portion M2 in Expression (6) is less than the lower limit value, there is a concern that a loss increases in a case where the optical signals are mixed at the connection portion between the third branch portion B3 and the second rectifying portion M2. On the other hand, in a case where the width WM2 of the second rectifying portion M2 exceeds the upper limit value in Expression (6), there is a concern that a loss increases in a case where the optical signal is distributed at the connection portion between the third branch portion B3 and the second rectifying portion M2.

In addition, in a case where the width WM2 of the second rectifying portion M2 in Expression (7) is less than the lower limit value, there is a concern that a loss increases in a case where the optical signals are mixed at the connection portion between the fourth branch portion B4 and the second rectifying portion M2. On the other hand, in a case where the width WM2 of the second rectifying portion M2 in Expression (7) exceeds the upper limit value, there is a concern that a loss increases in a case where the optical signal is distributed at the connection portion between the fourth branch portion B4 and the second rectifying portion M2.

Further, in a case where the width WM2 of the second rectifying portion M2 in Expression (10) is less than the lower limit value, there is a concern that a loss increases in a case where the optical signals are mixed in the second core pattern CP2. On the other hand, in a case where the width WM2 of the second rectifying portion M2 in Expression (10) exceeds the upper limit value, there is a concern that a loss increases in a case where the optical signal is distributed in the second core pattern CP2.

The widths WC5 to WC8 are each preferably about 5 to 100 $\mu$m, and more preferably about 10 to 70 $\mu$m. As a result, a core having good dimensional accuracy and having low transmission loss is obtained.

2.3.3. Shapes of First Rectifying Portion and Second Rectifying Portion

In the optical waveguide 1, it is preferable that the first rectifying portion M1 and the second rectifying portion M2 satisfy Expression (11) and Expression (12).

$$100 \times WM1 \leq LM1 \ldots (11)$$

$$100 \times WM2 \leq LM2 \ldots (12)$$

Expression (11) means that the length LM1 of the first rectifying portion M1 is 100 times or more the width WM1. In a case where the optical waveguide 1 satisfies Expression (11), the optical signals can be distributed at a desired distribution ratio in the first rectifying portion M1. That is, the distribution ratio in the first core pattern CP1 can be set by a ratio of the widths of the cores connected to the first rectifying portion M1. However, in a case where the length LM1 of the first rectifying portion M1 is not sufficient, the set width ratio may not be correctly reflected in the distribution ratio. Therefore, in a case where the optical waveguide 1 satisfies Expression (11), the optical signals can be distributed at a desired distribution ratio in the first core pattern CP1.

Expression (12) means that the length LM2 of the second rectifying portion M2 is 100 times or more the width WM2. In a case where the optical waveguide 1 satisfies Expression (12), the optical signals can be distributed at a desired distribution ratio in the second rectifying portion M2. That is, the distribution ratio in the second core pattern CP2 can be set by a ratio of the widths of the cores connected to the second rectifying portion M2. However, in a case where the length LM2 of the second rectifying portion M2 is not sufficient, the ratio of the set width may not be correctly reflected in the distribution ratio. Therefore, in a case where the optical waveguide 1 satisfies Expression (12), the optical signals can be distributed at a desired distribution ratio in the second core pattern CP2.

In addition, it is more preferable that the optical waveguide 1 satisfies Expression (13) and Expression (14).

$$200 \times WM1 \leq LM1 \leq 1000 \; [\mu m] \ldots (13)$$

$$200 \times WM2 \leq LM2 \leq 1000 \; [\mu m] \ldots (14)$$

The length LM1 and the length LM2 may exceed the upper limit value, but the effect of improving the distribution ratio is poor, and, on the other hand, there is a concern that the length of the optical waveguide 1 in the Y-axis direction is excessively long.

2.3.4. Linear Shape of Each Branch Portion

It is preferable that a line symmetrical relationship with the first straight line L1 as an axis of symmetry is established between a linear shape of the first branch portion B1 and a linear shape of the third branch portion B3 and between a linear shape of the second branch portion B2 and a linear shape of the fourth branch portion B4.

In a case where such a relationship is established, even though the optical waveguide 1 is rotated (inverted) by 180° with the first straight line L1 as the rotation axis, there is no change in the linear shape of each branch portion. That is, there is no difference in the bending loss at each branch portion before and after the inversion. Therefore, in a case where such an optical waveguide 1 is used for the connection work of the optical fibers, it is not required to be concerned about the inversion with the first straight line L1 as the rotation axis. Therefore, such an optical waveguide 1 contributes to the reduction of the burden of the connection work. In such an optical waveguide 1, even in the assembly work of the optical connection component, it is not required to be concerned about the inversion with the first straight line L1 as the rotation axis, and thus the burden of the assembly work can be reduced.

The line symmetrical relationship with the first straight line L1 as an axis of symmetry means a relationship in which, in a case where it is assumed that the optical waveguide 1 is folded at the first straight line L1, each core constituting the first branch portion B1 and each core constituting the third branch portion B3 overlap each other, and each core constituting the second branch portion B2 and each core constituting the fourth branch portion B4 overlap each other.

It is preferable that a line symmetrical relationship with the second straight line L2 as an axis of symmetry is established between the linear shape of the first branch portion B1 and the linear shape of the second branch portion B2 and between the linear shape of the third branch portion B3 and the linear shape of the fourth branch portion B4.

In a case where such a relationship is established, even though the optical waveguide 1 is rotated (inverted) by 180° with the second straight line L2 as the rotation axis, there is no change in the linear shape of each branch portion. That is, there is no difference in the bending loss at each branch portion before and after the inversion. Therefore, in a case where such an optical waveguide 1 is used for the connection work of the optical fibers, it is not required to be concerned about the inversion with the second straight line L2 as the rotation axis. Therefore, such an optical waveguide 1 contributes to the reduction of the burden of the connection work. In such an optical waveguide 1, even in the assembly work of the optical connection component, it is not required to be concerned about the inversion with the second straight line L2 as the rotation axis, and thus the burden of the assembly work can be reduced.

The line symmetrical relationship with the second straight line L2 as an axis of symmetry means a relationship in which, in a case where it is assumed that the optical waveguide 1 is folded at the second straight line L2, each core constituting the first branch portion B1 and each core constituting the second branch portion B2 overlap each other, and each core constituting the third branch portion B3 and each core constituting the fourth branch portion B4 overlap each other.

In addition, the phrase "the cores overlap each other" also includes a state where the cores are slightly deviated from each other. Specifically, a deviation amount in a center line between center lines of the two corresponding cores need only be 20% or less of the minimum width of the two corresponding cores.

2.4. Laminated Structure

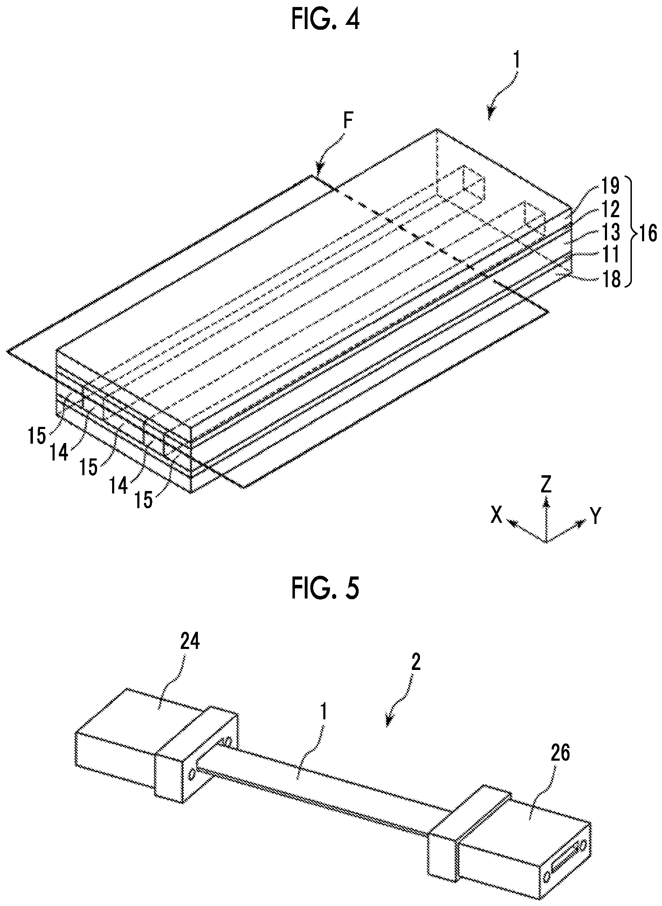

FIG. 4 is a perspective view showing a part of the optical waveguide 1 of FIG. 1 in an enlarged manner.

As described above, the optical waveguide 1 shown in FIG. 4 has a sheet shape spreading along a plane parallel to the X-Y plane. The optical waveguide 1 shown in FIG. 4 includes a laminate 16 in which a first support layer 18, a first cladding layer 11, a core layer 13, a second cladding layer 12, and a second support layer 19 are laminated in this order from below.

As shown in FIG. 4, side surfaces of the core portion 14 formed in the core layer 13 are surrounded by a side cladding portion 15, the first cladding layer 11, and the second cladding layer 12. In addition, a refractive index of the core portion 14 is higher than a refractive index of a cladding region. As a result, light can be propagated by being confined in the core portion 14. The first core pattern CP1 and the second core pattern CP2 are configured by such a core portion 14.

Since the laminate 16 has a laminated structure, it is relatively easy to manufacture the laminate 16. In addition, since the core layer 13 is interposed between the first cladding layer 11 and the second cladding layer 12, a difference in the refractive index at the interface is stable. Therefore, it is possible to form the core layer 13 including the core portion 14 having a small transmission loss.

At least a part of the side cladding portion 15 and at least one of the first cladding layer 11 or the second cladding layer 12 may be integrated.

In the core layer 13, a refractive index distribution in a plane orthogonal to an optical path of the core portion 14 may be any distribution, and may be, for example, a so-called step index (SI) type distribution in which the refractive index changes discontinuously, or may be a so-called graded index (GI) type distribution in which the refractive index changes continuously.

A cross-sectional shape of the core portion 14 by an X-Z plane, that is, a transverse cross-sectional shape of the core portion 14 is not particularly limited, and examples thereof include a circular shape such as a perfect circle, an elliptical shape, or an elongated shape, a polygonal shape such as a triangle, a quadrangle, a pentagon, or a hexagon, and other irregular shapes.

An average thickness of the core layer 13 is not particularly limited, but, is preferably about 1 to 200 $\mu$m, more preferably about 5 to 100 $\mu$m, and still more preferably about 10 to 70 $\mu$m. As a result, the optical characteristics and the mechanical strength required for the core layer 13 are ensured.

The material constituting the core layer 13 is not particularly limited, and examples thereof include a resin material, a glass material, a silicon material, and a composite material of these materials and other materials. Among these materials, from the viewpoint of impact resistance, ease of handling, and the like, the resin material is preferably used.

An average thickness of each of the first cladding layer 11 and the second cladding layer 12 is preferably about 1 to 200 $\mu$m, more preferably about 3 to 100 $\mu$m, and still more preferably about 5 to 60 $\mu$m. As a result, the optical characteristics and the mechanical strength required for the first cladding layer 11 and the second cladding layer 12 are ensured.

In addition, the materials constituting the first cladding layer 11 and the second cladding layer 12 are used by being selected as appropriate from the materials described above as the material constituting the core layer 13.

At least one of the first cladding layer 11 or the second cladding layer 12 need only be provided as required, and may be omitted.

The first support layer 18 is provided on a lower surface of the first cladding layer 11. The second support layer 19 is provided on an upper surface of the second cladding layer 12. By providing such a first support layer 18 and such a second support layer 19, the core layer 13, the first cladding layer 11, and the second cladding layer 12 are protected from heat, an external force, or the like.

The materials constituting the first support layer 18 and the second support layer 19 are not particularly limited, and examples thereof include a resin material, a glass material, a silicon material, and a composite material of these materials and other materials. Among these materials, from the viewpoint of impact resistance, ease of handling, and the like, the resin material is preferably used.

The first support layer 18 and the second support layer 19 need only be provided as required, and may be omitted.

As described above, the laminate 16 includes the first cladding layer 11, the core layer 13, and the second cladding layer 12.

In FIG. 4, a plane F that is parallel to the X-Y plane, which is a flat surface, and passes through the intermediate portion of the core layer 13 is assumed. The laminate 16 preferably has a plane symmetrical relationship with the plane F.

The plane symmetrical relationship means a relationship in which a line segment connecting any two points facing each other with the plane F interposed therebetween is perpendicularly bisected by the plane F.

In a case where the laminate 16 has such a relationship, even though the optical waveguide 1 configured by the laminate 16 is rotated by 180° with the first straight line L1 or the second straight line L2 as the rotation axis, there is no change in the position of the incidence/emission surface in a thickness direction of the optical waveguide 1. Therefore, in a case where such an optical waveguide 1 is used for the connection work of the optical fibers, it is not required to be concerned about the inversion with the first straight line L1 or the second straight line L2 as the rotation axis. Therefore, such an optical waveguide 1 contributes to the reduction of the burden of the connection work. In such an optical waveguide 1, even in the assembly work of the optical connection component, it is not required to be concerned about the inversion with the first straight line L1 or the second straight line L2 as the rotation axis, and thus the burden of the assembly work can be reduced.

The laminate 16 is preferably made of the resin material. As a result, the optical waveguide 1 having excellent impact resistance and ease of handling is obtained.

## 3. Optical Waveguide with Ferrule

The optical waveguide 1 may be used in a state where a ferrule is attached to one end or both ends thereof, that is, in a state of an optical waveguide with a ferrule.

FIG. 5 is a perspective view showing an example of an optical waveguide 2 with the ferrule.

The optical waveguide 2 with the ferrule includes the optical waveguide 1 and ferrules 24 and 26. Examples of the ferrules 24 and 26 include a PMT ferrule.

## 4. Housing and Connection Portion

The optical waveguide 2 with the ferrule may be used in a state of being contained in the housing.

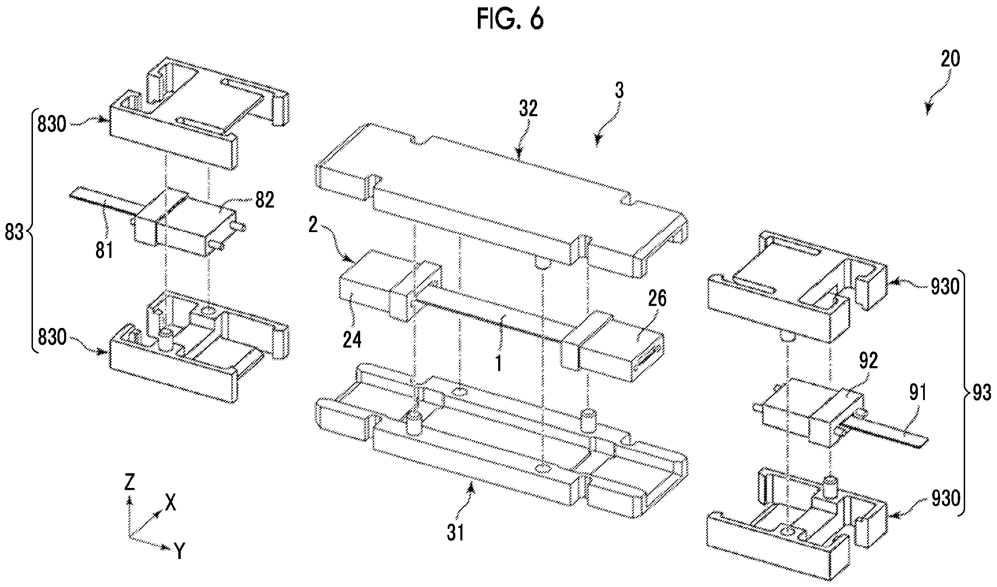

FIG. 6 is a perspective view showing a part of an optical wiring component 20 including the optical waveguide 2 with the ferrule of FIG. 5, a housing 3, a first connection portion 83, and a second connection portion 93, and fiber ribbons 81 and 91 in a partially exploded manner.

The housing 3 shown in FIG. 6 includes optical waveguide containers 31 and 32. These optical waveguide containers are combined with each other to form a space that contains the optical waveguide 2 with the ferrule therein.

The fiber ribbon 81 shown in FIG. 6 is a member in which a plurality of optical fibers including the first A optical fiber F1A and the second A optical fiber F2A are bundled into one ribbon shape. The fiber ribbon 91 shown in FIG. 6 is a member in which a plurality of optical fibers including the first B optical fiber F1B and the second B optical fiber F2B are bundled into one ribbon shape. The ferrules 82 and 92 are attached to the fiber ribbons 81 and 91.

FIG. 6 shows the first connection portion 83 which is an assembly of two components 830 and 830, and the second connection portion 93 which is an assembly of two components 930 and 930. The first connection portion 83 connects one end of the optical waveguide 2 with the ferrule to the fiber ribbon 81 to which the ferrule 82 is attached. The second connection portion 93 connects the other end of the optical waveguide 2 with the ferrule to the fiber ribbon 91 to which the ferrule 92 is attached.

The optical wiring component 20 shown in FIG. 6 is configured by the optical waveguide 2 with the ferrule, the housing 3, the first connection portion 83, the second connection portion 93, and the fiber ribbons 81 and 91 to which the ferrules 82 and 92 are attached. In the optical wiring component 20, in the assembly work of containing the optical waveguide 1 in the housing 3 or the connection work of connecting the component, after being assembled, to the optical fiber, the degree of freedom of the posture of the optical waveguide 1 is high, and thus it is possible to reduce the burden on the operator. The optical wiring component 20 can also be applied to a part of the optical wiring component 10 shown in FIG. 1.

## 5. Effects of Above-Described Embodiment

As described above, the optical waveguide 1 is the optical waveguide that forms the sheet shape spreading along the X-Y plane (plane), and includes the first core pattern CP1 and the second core pattern CP2. In a case where two straight lines orthogonal to each other in the X-Y plane are defined as the first straight line L1 and the second straight line L2, the first core pattern CP1 and the second core pattern CP2 are independently disposed on both sides with respect to the first straight line L1.

The first core pattern CP1 includes the first incidence/emission surface P1, the second incidence/emission surface P2, the third incidence/emission surface P3, the fourth incidence/emission surface P4, the first rectifying portion M1, the first branch portion B1, and the second branch portion B2. The first rectifying portion M1 extends along the first straight line L1. The first branch portion B1 connects the one end of the first rectifying portion M1 to the first incidence/emission surface P1 and the second incidence/emission surface P2. The second branch portion B2 connects the other end of the first rectifying portion M1 to the third incidence/emission surface P3 and the fourth incidence/emission surface P4.

The second core pattern CP2 includes the fifth incidence/emission surface P5, the sixth incidence/emission surface P6, the seventh incidence/emission surface P7, the eighth incidence/emission surface P8, the second rectifying portion M2, the third branch portion B3, and the fourth branch portion B4. The second rectifying portion M2 extends along the first straight line L1. The third branch portion B3 connects the one end of the second rectifying portion M2 to the fifth incidence/emission surface P5 and the sixth incidence/emission surface P6. The fourth branch portion B4 connects the other end of the second rectifying portion M2 to the seventh incidence/emission surface P7 and the eighth incidence/emission surface P8.

A line symmetrical relationship with the first straight line L1 as an axis of symmetry is established between the first incidence/emission surface P1, the second incidence/emission surface P2, the third incidence/emission surface P3, and the fourth incidence/emission surface P4 and the fifth incidence/emission surface P5, the sixth incidence/emission surface P6, the seventh incidence/emission surface P7, and the eighth incidence/emission surface P8.

A line symmetrical relationship with the second straight line L2 as an axis of symmetry is established between the first incidence/emission surface P1 and the third incidence/emission surface P3 and the second incidence/emission surface P2 and the fourth incidence/emission surface P4.

A line symmetrical relationship with the second straight line L2 as an axis of symmetry is established between the fifth incidence/emission surface P5 and the seventh incidence/emission surface P7 and the sixth incidence/emission surface P6 and the eighth incidence/emission surface P8.

In such an optical waveguide 1, since the transmission direction of the optical signal can be divided, a special device required transmit bidirectional optical signals with one core pattern is not required. Therefore, it is possible to simplify the structures of the first electronic device E1, the second electronic device E2, and the third electronic device E3 that transmit and receive information through the optical waveguide 1, or the structures of the light emission portion and the light reception portion. In addition, since the optical element that separates the downstream optical signal and the upstream optical signal is not required, a decrease in transmission quality is suppressed, and high-speed and large-capacity communication can be performed. Further, in a case where light of the same wavelength is used for the downstream optical signal and the upstream optical signal, it is possible to solve the problem that the transmission quality varies in accordance with the wavelength.

In addition, in the optical waveguide 1, since the information can be distributed in a form of the optical signal, for example, the information processing units can be parallelized while suppressing power consumption, which contributes to the redundancy of the system.

Further, in a case where such a relationship is established, even though the optical waveguide 1 is rotated (inverted) by 180° with the first straight line L1 or the second straight line L2 as the rotation axis, there is no change in the width and the position of each of the incidence/emission surfaces. Therefore, in a case where the optical waveguide 1 is used for the connection work of the optical fibers, it is not required to be concerned about the inversion with the first straight line L1 or the second straight line L2 as the rotation axis. Therefore, in the optical waveguide 1, the burden on the operator can be reduced in the connection work or the assembly work of the optical connection components.

In addition, the first branch portion B1 includes the first core C1 and the second core C2. The first core C1 connects the one end of the first rectifying portion M1 to the first incidence/emission surface P1. The second core C2 connects the one end of the first rectifying portion M1 to the second incidence/emission surface P2.

The second branch portion B2 includes the third core C3 and the fourth core C4. The third core C3 connects the other end of the first rectifying portion M1 to the third incidence/emission surface P3. The fourth core C4 connects the other end of the first rectifying portion M1 to the fourth incidence/emission surface P4.

In addition, the width at the intermediate portion of the length LM1 of the first rectifying portion M1 is denoted by WM1.

The width of the first core C1 at the connection portion between the first rectifying portion M1 and the first branch portion B1 is denoted by WC1, the width of the second core C2 at the connection portion between the first rectifying portion M1 and the first branch portion B1 is denoted by WC2, the width of the third core C3 at the connection portion between the first rectifying portion M1 and the second branch portion B2 is denoted by WC3, and the width of the fourth core C4 at the connection portion between the first rectifying portion M1 and the second branch portion B2 is denoted by WC4.

In this case, it is preferable that the optical waveguide 1 satisfies the relationships represented by Expression (1) and Expression (2).

$$0.9 \times (WC1 + WC2) \leq WM1 \leq 1.1 \times (WC1 + WC2) \ ... \ (1)$$

$$0.9 \times (WC3 + WC4) \leq WM1 \leq 1.1 \times (WC3 + WC4) \ ... \ (2)$$

Further, the width of the first incidence/emission surface P1 is denoted by WP1, the width of the second incidence/emission surface P2 is denoted by WP2, the width of the third incidence/emission surface P3 is denoted by WP3, and the width of the fourth incidence/emission surface P4 is denoted by WP4.

In this case, it is preferable that the optical waveguide 1 satisfies the relationships represented by Expression (3), Expression (4), and Expression (5).

$$WA = WP1 = WP3 \ldots (3)$$

$$WB = WP2 = WP4 \ldots (4)$$

$$0.9 \times (WA + WB) \leq WM1 \leq 1.1 \times (WA + WB) \ldots (5)$$

In such an optical waveguide 1, it is possible to suppress the loss associated with the change in the width of the core in the range from the first rectifying portion M1 to the first incidence/emission surface P1 and the second incidence/emission surface P2 and in the range from the first rectifying portion M1 to the third incidence/emission surface P3 and the fourth incidence/emission surface P4.

In addition, the third branch portion B3 includes the fifth core C5 and the sixth core C6. The fifth core C5 connects the one end of the second rectifying portion M2 to the fifth incidence/emission surface P5. The sixth core C6 connects the one end of the second rectifying portion M2 to the sixth incidence/emission surface P6.

The fourth branch portion B4 includes the seventh core C7 and the eighth core C8. The seventh core C7 connects the other end of the second rectifying portion M2 to the seventh incidence/emission surface P7. The eighth core C8 connects the other end of the second rectifying portion M2 to the eighth incidence/emission surface P8.

In addition, the width at the intermediate portion of the length LM2 of the second rectifying portion M2 is denoted by WM2.

The width of the fifth core C5 at the connection portion between the second rectifying portion M2 and the third branch portion B3 is denoted by WC5, the width of the sixth core C6 at the connection portion between the second rectifying portion M2 and the third branch portion B3 is denoted by WC6, the width of the seventh core C7 at the connection portion between the second rectifying portion M2 and the fourth branch portion B4 is denoted by WC7, and the width of the eighth core C8 at the connection portion between the second rectifying portion M2 and the fourth branch portion B4 is denoted by WC8.

In this case, it is preferable that the optical waveguide 1 satisfies the relationships represented by Expression (6) and Expression (7).

$$0.9 \times (WC5 + WC6) \leq WM2 \leq 1.1 \times (WC5 + WC6) \ldots (6)$$

$$0.9 \times (WC7 + WC8) \leq WM2 \leq 1.1 \times (WC7 + WC8) \ldots (7)$$

Further, the width of the fifth incidence/emission surface P5 is denoted by WP5, the width of the sixth incidence/emission surface P6 is denoted by WP6, the width of the seventh incidence/emission surface P7 is denoted by WP7, and the width of the eighth incidence/emission surface P8 is denoted by WP8.

In this case, it is preferable that the optical waveguide 1 satisfies the relationships represented by Expression (8), Expression (9), and Expression (10).

$$WA = WP5 = WP7 \ldots (8)$$

$$WB = WP6 = WP8 \ldots (9)$$

$$0.9 \times (WA + WB) \leq WM2 \leq 1.1 \times (WA + WB) \ldots (10)$$

In such an optical waveguide 1, it is possible to suppress the loss associated with the change in the width of the core in the range from the second rectifying portion M2 to the fifth incidence/emission surface P5 and the sixth incidence/emission surface P6 and in the range from the second rectifying portion M2 to the seventh incidence/emission surface P7 and the eighth incidence/emission surface P8.

In addition, in a case where the length of the first rectifying portion M1 is denoted by LM1, the width at the intermediate portion of the length LM1 is denoted by WM1, the length of the second rectifying portion M2 is denoted by LM2, and the width at the intermediate portion of the length LM2 is denoted by WM2, it is preferable that the optical waveguide 1 satisfies Expression (11) and Expression (12).

$$100 \times WM1 \leq LM1 \quad ... \quad (11)$$

$$100 \times WM2 \leq LM2 \quad ... \quad (12)$$

In such an optical waveguide 1, the optical signals can be distributed at a desired distribution ratio.

In addition, it is preferable that a line symmetrical relationship with the first straight line L1 as an axis of symmetry is established between the linear shape of the first branch portion B1 and the linear shape of the third branch portion B3 and between the linear shape of the second branch portion B2 and the linear shape of the fourth branch portion B4.

In addition, it is preferable that a line symmetrical relationship with the second straight line L2 as an axis of symmetry is established between the linear shape of the first branch portion B1 and the linear shape of the second branch portion B2 and between the linear shape of the third branch portion B3 and the linear shape of the fourth branch portion B4.

In such an optical waveguide 1, even though the optical waveguide 1 is rotated (inverted) by 180° with the first straight line L1 or the second straight line L2 as the rotation axis, there is no change in the linear shape of each branch portion. In a case where such an optical waveguide 1 is used for the connection work of the optical fibers, it is not required to be concerned about the inversion with the first straight line L1 or the second straight line L2 as the rotation axis. Therefore, in the connection work or the assembly work of the optical connection component, the optical waveguide 1 can reduce the burden on the operator.

In addition, it is preferable that the optical waveguide 1 is configured by the laminate 16 including the core layer 13, the first cladding layer 11, and the second cladding layer 12. The core layer 13 includes the first core pattern CP1 and the second core pattern CP2. The first cladding layer 11 is laminated on one surface of the core layer 13. The second cladding layer 12 is laminated on the other surface of the core layer 13.

Since the laminate 16 has the laminated structure, it is relatively easy to manufacture the laminate 16. In addition, since the core layer 13 is interposed between the first cladding layer 11 and the second cladding layer 12, the difference in the refractive index at the interface is stable. Therefore, it is possible to form the core layer 13 including the core portion 14 having a small transmission loss.

In addition, it is preferable that the laminate 16 has a plane symmetrical relationship with the plane F that is parallel to the X-Y plane (plane) and passes through the intermediate portion of the thickness of the core layer 13.

Even though the optical waveguide 1 configured by the laminate 16 is rotated by 180° with the first straight line L1 or the second straight line L2 as the rotation axis, there is no change in the position of the incidence/emission surface in a thickness direction of the optical waveguide 1. Therefore, in a case where such an optical waveguide 1 is used for the connection work of the optical fibers, it is not required to be concerned about the inversion with the first straight line L1 or the second straight line L2 as the rotation axis. Therefore, in the connection work or the assembly work of the optical connection component, the optical waveguide 1 can reduce the burden on the operator.

In addition, the laminate 16 is preferably made of the resin material. As a result, the optical waveguide 1 having excellent impact resistance and ease of handling is obtained.

The optical wiring component 20 according to the embodiment includes the optical waveguide 1, the housing 3, the first connection portion 83, and the second connection portion 93.

The housing 3 contains the optical waveguide 1. The first connection portion 83 connects at least one of the first incidence/emission surface P1 or the second incidence/emission surface P2 to the first A optical fiber F1A, and connects at least one of the fifth incidence/emission surface P5 or the sixth incidence/emission surface P6 to the second A optical fiber F2A. The second connection portion 93 connects the third incidence/emission surface P3 and the fourth incidence/emission surface P4 to the first B optical fiber F1B and connects the seventh incidence/emission surface P7 and the eighth incidence/emission surface P8 to the second B optical fiber F2B.

In the optical wiring component 20, since the degree of freedom of the posture of the optical waveguide 1 is high, it is possible to reduce the burden on the operator in the assembly work of containing the optical waveguide 1 in the housing 3 and the connection work of connecting the component, after being assembled, to the optical fiber.

In addition, the optical wiring component 10 further includes the first A optical fiber F1A, the first B optical fiber F1B, the second A optical fiber F2A, the second B optical fiber F2B, the one or two first light emission portions (first transmission portion T1), the two first light reception portions (second reception portion R2 and third reception portion R3), the two second light emission portions (second transmission portion T2 and third transmission portion T3), and the one or two second light reception portions (first reception portion R1).

The first light emission portion (first transmission portion T1) causes the light (optical signal S2) to be incident on the first core pattern CP1 through the first A optical fiber F1A. The first light reception portion (second reception portion R2 and third reception portion R3) receives the light (optical signals S3 and S4) emitted from the first core pattern CP1 through the first B optical fiber F1B. The second light emission portion (second transmission portion T2 and third transmission portion T3) causes the light (optical signals S8 and S7) to be incident on the second core pattern CP2 through the second B optical fiber F2B. The second light reception portion (first reception portion R1) receives the light (optical signal S6) emitted from the second core pattern CP2 through the second A optical fiber F2A.

In such an optical wiring component 10, since the degree of freedom of the posture of the optical waveguide 1 is high, that is, the restriction on the posture of the optical waveguide 1 during the connection is small, it is possible to reduce the burden on the operator in the connection work of connecting the optical waveguide 1 to the optical fiber.

Hereinabove, the optical waveguide and the optical wiring component according to the embodiment of the present invention have been described based on the shown embodiment, but the present invention is not limited to this. For example, in the optical waveguide and the optical wiring component according to the embodiment of the present invention, each portion according to the embodiment may be replaced with any configuration having the same function, or any configuration may be added to the embodiment. Each branch portion may branch into three or more portions. Further, the rectifying portion may branch into two cores in each branch portion according to the above-described embodiment, and the core after branching may be configured to further branch into two or more cores.

Industrial Applicability

According to the present invention, it is possible to obtain the optical waveguide and the optical wiring component that can reduce the burden of the connection work or the assembly work and can contribute to the simplification of the structure of the connected device. Therefore, the present invention has industrial applicability.

Reference Signs List

1: optical waveguide
2: optical waveguide with ferrule
3: housing
10: optical wiring component
11: first cladding layer
12: second cladding layer
13: core layer
14: core portion
15: side cladding portion
16: laminate
18: first support layer
19: second support layer
20: optical wiring component
24: ferrule
26: ferrule
31: optical waveguide container
32: optical waveguide container
81: fiber ribbon
82: ferrule
83: first connection portion
91: fiber ribbon
92: ferrule
93: second connection portion
830: component
930: component
B1: first branch portion
B2: second branch portion
B3: third branch portion
B4: fourth branch portion
C1: first core
C2: second core
C3: third core
C4: fourth core

C5: fifth core
C6: sixth core
C7: seventh core
C8: eighth core
CP1: first core pattern
CP2: second core pattern
E1: first electronic device
E2: second electronic device
E3: third electronic device
F: plane
F1A: first A optical fiber
F1B: first B optical fiber
F2A: second A optical fiber
F2B: second B optical fiber
L1: first straight line
L2: second straight line
M1: first rectifying portion
M2: second rectifying portion
P1: first incidence/emission surface
P2: second incidence/emission surface
P3: third incidence/emission surface
P4: fourth incidence/emission surface
P5: fifth incidence/emission surface
P6: sixth incidence/emission surface
P7: seventh incidence/emission surface
P8: eighth incidence/emission surface
R1: first reception portion
R2: second reception portion
R3: third reception portion
S2: optical signal
S3: optical signal
S4: optical signal
S5: optical signal
S6: optical signal
S7: optical signal
S8: optical signal
T1: first transmission portion
T2: second transmission portion
T3: third transmission portion
LM1: length
LM2: length
WC1: width
WC2: width
WC3: width
WC4: width
WC5: width
WC6: width
WC7: width
WC8: width
WM1: width
WM2: width
WP1: width
WP2: width
WP3: width
WP4: width
WP5: width
WP6: width
WP7: width

WP8: width

**Claims**

1.  An optical waveguide that forms a sheet shape spreading along a plane, the optical waveguide comprising:

    a first core pattern and a second core pattern that are independently disposed, in a case where two straight lines orthogonal to each other in the plane are defined as a first straight line and a second straight line, on both sides with respect to the first straight line,
    wherein the first core pattern includes

    a first incidence/emission surface and a second incidence/emission surface that are provided at one end of the first core pattern,
    a third incidence/emission surface and a fourth incidence/emission surface that are provided at the other end of the first core pattern,
    a first rectifying portion that extends along the first straight line,
    a first branch portion that connects one end of the first rectifying portion to the first incidence/emission surface and the second incidence/emission surface, and
    a second branch portion that connects the other end of the first rectifying portion to the third incidence/emission surface and the fourth incidence/emission surface,

    wherein the second core pattern includes

    a fifth incidence/emission surface and a sixth incidence/emission surface that are provided at one end of the second core pattern,
    a seventh incidence/emission surface and an eighth incidence/emission surface that are provided at the other end of the second core pattern,
    a second rectifying portion that extends along the first straight line,
    a third branch portion that connects one end of the second rectifying portion to the fifth incidence/emission surface and the sixth incidence/emission surface, and
    a fourth branch portion that connects the other end of the second rectifying portion to the seventh incidence/emission surface and the eighth incidence/emission surface,

    wherein a line symmetrical relationship with the first straight line as an axis of symmetry is established between the first incidence/emission surface, the second incidence/emission surface, the third incidence/emission surface, and the fourth incidence/emission surface and the fifth incidence/emission surface, the sixth incidence/emission surface, the seventh incidence/emission surface, and the eighth incidence/emission surface,
    wherein a line symmetrical relationship with the second straight line as an axis of symmetry is established between the first incidence/emission surface and the third incidence/emission surface and the second incidence/emission surface and the fourth incidence/emission surface, and
    wherein a line symmetrical relationship with the second straight line as an axis of symmetry is established between the fifth incidence/emission surface and the seventh incidence/emission surface and the sixth incidence/emission surface and the eighth incidence/emission surface.

2.  The optical waveguide according to claim 1,

    wherein the first branch portion includes

    a first core that connects the one end of the first rectifying portion to the first incidence/emission surface, and
    a second core that connects the one end of the first rectifying portion to the second incidence/emission surface,

    wherein the second branch portion includes

    a third core that connects the other end of the first rectifying portion to the third incidence/emission surface, and
    a fourth core that connects the other end of the first rectifying portion to the fourth incidence/emission surface, and

wherein in a case where a width at an intermediate portion of a length of the first rectifying portion is denoted by WM1, a width of the first core at a connection portion between the first rectifying portion and the first branch portion is denoted by WC1, a width of the second core at the connection portion between the first rectifying portion and the first branch portion is denoted by WC2, a width of the third core at a connection portion between the first rectifying portion and the second branch portion is denoted by WC3, a width of the fourth core at the connection portion between the first rectifying portion and the second branch portion is denoted by WC4, a width of the first incidence/emission surface is denoted by WP1, a width of the second incidence/emission surface is denoted by WP2, a width of the third incidence/emission surface is denoted by WP3, and a width of the fourth incidence/emission surface is denoted by WP4,

$$0.9 \times (WC1 + WC2) \leq WM1 \leq 1.1 \times (WC1 + WC2),$$

$$0.9 \times (WC3 + WC4) \leq WM1 \leq 1.1 \times (WC3 + WC4),$$

$$WA = WP1 = WP3,$$

$$WB = WP2 = WP4,$$

and

$$0.9 \times (WA + WB) \leq WM1 \leq 1.1 \times (WA + WB)$$

are satisfied.

3. The optical waveguide according to claim 2,

wherein the third branch portion includes

a fifth core that connects the one end of the second rectifying portion to the fifth incidence/emission surface, and
a sixth core that connects the one end of the second rectifying portion to the sixth incidence/emission surface,

wherein the fourth branch portion includes

a seventh core that connects the other end of the second rectifying portion to the seventh incidence/emission surface, and
an eighth core that connects the other end of the second rectifying portion to the eighth incidence/emission surface, and

wherein in a case where a width at an intermediate portion of a length of the second rectifying portion is denoted by WM2, a width of the fifth core at a connection portion between the second rectifying portion and the third branch portion is denoted by WC5, a width of the sixth core at the connection portion between the second rectifying portion and the third branch portion is denoted by WC6, a width of the seventh core at a connection portion between the second rectifying portion and the fourth branch portion is denoted by WC7, a width of the eighth core at the connection portion between the second rectifying portion and the fourth branch portion is denoted by WC8, a width of the fifth incidence/emission surface is denoted by WP5, a width of the sixth incidence/emission surface is denoted by WP6, a width of the seventh incidence/emission surface is denoted by WP7, and a width of the eighth incidence/emission surface is denoted by WP8,

$$0.9 \times (WC5 + WC6) \leq WM2 \leq 1.1 \times (WC5 + WC6),$$

$$0.9 \times (WC7 + WC8) \leq WM2 \leq 1.1 \times (WC7 + WC8),$$

$$WA = WP5 = WP7,$$

$$WB = WP6 = WP8,$$

and

$$0.9 \times (WA + WB) \leq WM2 \leq 1.1 \times (WA + WB)$$

are satisfied.

4. The optical waveguide according to any one of claims 1 to 3,
wherein, in a case where a length of the first rectifying portion is denoted by LM1, a width at an intermediate portion of the length LM1 is denoted by WM1, a length of the second rectifying portion is denoted by LM2, and a width at an intermediate portion of the length LM2 is denoted by WM2,

$$100 \times WM1 \leq LM1,$$

and

$$100 \times WM2 \leq LM2$$

are satisfied.

5. The optical waveguide according to any one of claims 1 to 3,

    wherein a line symmetrical relationship with the first straight line as an axis of symmetry is established between a linear shape of the first branch portion and a linear shape of the third branch portion and between a linear shape of the second branch portion and a linear shape of the fourth branch portion, and
    wherein a line symmetrical relationship with the second straight line as an axis of symmetry is established between the linear shape of the first branch portion and the linear shape of the second branch portion and between the linear shape of the third branch portion and the linear shape of the fourth branch portion.

6. The optical waveguide according to any one of claims 1 to 3,
wherein the optical waveguide is configured by a laminate including

    a core layer that includes the first core pattern and the second core pattern,
    a first cladding layer that is laminated on one surface of the core layer, and
    a second cladding layer that is laminated on the other surface of the core layer.

7. The optical waveguide according to claim 6,
wherein the laminate has a plane symmetrical relationship with a plane that is parallel to the plane and that passes through an intermediate portion of a thickness of the core layer.

8. The optical waveguide according to claim 6,
wherein the laminate is made of a resin material.

9. An optical wiring component comprising:

    the optical waveguide according to claim 1 or 2;
    a housing that contains the optical waveguide;
    a first connection portion that connects at least one of the first incidence/emission surface or the second incidence/emission surface to a first A optical fiber and that connects at least one of the fifth incidence/emission surface or the sixth incidence/emission surface to a second A optical fiber; and
    a second connection portion that connects the third incidence/emission surface and the fourth incidence/emission surface to a first B optical fiber and that connects the seventh incidence/emission surface and the eighth incidence/emission surface to a second B optical fiber.

10. The optical wiring component according to claim 9, further comprising:

the first A optical fiber;
the first B optical fiber;
the second A optical fiber;
the second B optical fiber;
one or two first light emission portions that cause light to be incident on the first core pattern through the first A optical fiber;
two first light reception portions that receive light emitted from the first core pattern through the first B optical fiber;
two second light emission portions that cause light to be incident on the second core pattern through the second B optical fiber; and
one or two second light reception portions that receive light emitted from the second core pattern through the second A optical fiber.

FIG. 1

EP 4 603 882 A1

# FIG. 2

# FIG. 3

## FIG. 4

## FIG. 5

# FIG. 6

EP 4 603 882 A1

## INTERNATIONAL SEARCH REPORT

| International application No. |
| --- |
| **PCT/JP2023/036575** |

| A. | CLASSIFICATION OF SUBJECT MATTER |
| --- | --- |

*G02B 6/125*(2006.01)i; *G02B 6/30*(2006.01)i; *G02B 6/36*(2006.01)i
FI:   G02B6/125 301; G02B6/30; G02B6/36

According to International Patent Classification (IPC) or to both national classification and IPC

| B. | FIELDS SEARCHED |
| --- | --- |

Minimum documentation searched (classification system followed by classification symbols)

G02B6/12-6/24; G02B6/255-6/27; G02B6/30-6/34; G02B6/36-6/43

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2004-233665 A (SUMITOMO ELECTRIC IND. LTD.) 19 August 2004 (2004-08-19) paragraphs [0084]-[0103], fig. 13 | 1-10 |
| A | JP 08-082719 A (OKI ELECTRIC IND. CO., LTD.) 26 March 1996 (1996-03-26) entire text, all drawings | 1-10 |
| A | JP 11-119158 A (NIPPON TELEGR. & TELEPH. CORP.) 30 April 1999 (1999-04-30) entire text, all drawings | 1-10 |
| A | JP 2004-151175 A (NIPPON TELEGR. & TELEPH. CORP.) 27 May 2004 (2004-05-27) entire text, all drawings | 1-10 |
| A | JP 2005-250291 A (SYNCLAYER INC.) 15 September 2005 (2005-09-15) entire text, all drawings | 1-10 |
| A | JP 2018-013640 A (SUMITOMO BAKELITE CO., LTD.) 25 January 2018 (2018-01-25) entire text, all drawings | 1-10 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2023** | **12 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/036575** |

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | US 2017/0276878 A1 (HUAWEI TECHNOLOGIES CO., LTD.) 28 September 2017 (2017-09-28)<br>entire text, all drawings | 1-10 |

Form PCT/ISA/210 (second sheet) (January 2015)

## INTERNATIONAL SEARCH REPORT
### Information on patent family members

International application No.

**PCT/JP2023/036575**

| Patent document cited in search report | | | Publication date (day/month/year) | Patent family member(s) | | | Publication date (day/month/year) |
|---|---|---|---|---|---|---|---|
| JP | 2004-233665 | A | 19 August 2004 | (Family: none) | | | |
| JP | 08-082719 | A | 26 March 1996 | (Family: none) | | | |
| JP | 11-119158 | A | 30 April 1999 | (Family: none) | | | |
| JP | 2004-151175 | A | 27 May 2004 | (Family: none) | | | |
| JP | 2005-250291 | A | 15 September 2005 | (Family: none) | | | |
| JP | 2018-013640 | A | 25 January 2018 | (Family: none) | | | |
| US | 2017/0276878 | A1 | 28 September 2017 | EP CN | 3223049 107402489 | A1 A | |

Form PCT/ISA/210 (patent family annex) (January 2015)

**EP 4 603 882 A1**

**REFERENCES CITED IN THE DESCRIPTION**

**Patent documents cited in the description**

- JP 2017151275 A

- WO 2021192674 A